Europäisches Patentamt

(19) European Patent Office

Office européen des brevets

(11) Publication number: **0 091 243**
**B1**

(12) **EUROPEAN PATENT SPECIFICATION**

(45) Date of publication of patent specification: **10.12.86**

(21) Application number: **83301663.7**

(22) Date of filing: **24.03.83**

(51) Int. Cl.⁴: **G 02 F 1/17, G 09 G 3/34**

(54) Electrochromic display elements and electrochromic display devices.

(30) Priority: **26.03.82 JP 48752/82**

(43) Date of publication of application:
**12.10.83 Bulletin 83/41**

(45) Publication of the grant of the patent:
**10.12.86 Bulletin 86/50**

(84) Designated Contracting States:
**CH DE FR GB LI**

(56) References cited:
**EP-A-0 007 110**
**DE-A-2 457 817**

**IBM TECHNICAL DISCLOSURE BULLETIN, vol.
21, no. 4, September 1978, pages 1671-1672,
New York, USA, I. JONES: "Programmable
keytop employing electrochrome display"**

(73) Proprietor: **KABUSHIKI KAISHA DAINI
SEIKOSHA**
**·31-1, 6-chome Kameido**
**Koto-ku Tokyo (JP)**

(72) Inventor: **Harada, Takamasa**
**Kabushiki Kaisha Daini Seikosha 6-31-1,
Kameido**
**Koto-ku Tokyo (JP)**
Inventor: **Iwasa, Kouji**
**Kabushiki Kaisha Daini Seikosha 6-31-1,
kameido**
**Koto-ku Tokyo (JP)**

(74) Representative: **Caro, William Egerton et al
J. MILLER & CO. Lincoln House 296-302 High
Holborn
London WC1V 7JH (GB)**

# Description

This invention relates to electrochromic display devices.

Electrochromic display devices operate on the principle of the colour change occurring by virtue of an electro-chemical oxidation-reduction reaction of an electrochromic material when a voltage is applied thereto.

Electrochromic display devices have the following advantages. They have small power consumption comparable to that of liquid crystal display devices. The display produced is clearer, easier to see and more distinct than the display produced by a liquid crystal display device. Electrochromic display devices have a memory characteristic the display being maintained without the application of a voltage. Electrochromic display devices with a relatively large area can be easily manufactured since a strict control of the distance between opposed substrates is not required.

However, electrochromic display devices are difficult to put into practical effect for the following reasons.

1. Drive circuitry presently on the market for driving conventional display elements such as liquid crystal display elements and light emitting diodes cannot be used for driving electrochromic display elements unmodified. An electrochromic display device is driven only when it is desired to change the display state i.e. to change from a coloured state to a bleached state or vice versa, by applying a voltage between a display electrode and the electrochromic display element and a counter electrode. A constant amount of electric charge is injected into the display electrode from the counter electrode when the display electrode changes from the bleached state to the coloured state. The same amount of electric charge is removed from the display electrode when the display electrode changes from the coloured state to the bleached state. The drive circuitry for an electrochromic display element must be constructed to turn off the voltage when the display state of the display electrode is not to be changed. Accordingly, to put an electrochromic display device on the market requires drive circuitry tailored to the requirements of the electrochromic display elements.

2. The conventional electrochromic material used in electrochromic display devices is tungsten oxide in the form of a film of several 1000 Å thick and formed by a vacuum evaporation technique on the display electrode. An electrochromic display device having a relatively large area requires the formation of a film of tungsten oxide with uniform thickness over a relatively large area and this is difficult to achieve.

3. Since electrochromic display devices using tungsten oxide etc. do not exhibit clear threshold characteristics a time sharing drive method is technically difficult and so it is quite difficult to produce a dot matrix electrochromic display device.

DE—A—2457817 discloses an electrochromic display device comprising a plurality of electrochromic display elements each of which makes up a picture unit of a matrix display each display element consisting of an electrochromic display portion having a display electrode which serves as a picture element, and a drive circuit for changing the display state of said display electrode. EP—A—7110 discloses an electrochromic display device which comprises a display state detection circuit for detecting the display state of the segmented display electrodes and a control circuit for latching an external display information signal in response to an external address signal and for controlling the drive circuit by comparing the display information signal with the output from the display state detection circuit.

Such known electrochromic display devices have the disadvantage that should an electrochromic display element become faulty the whole of the electrochromic display device has to be replaced.

To overcome this problem, the present invention provides an electrochromic display device of this type wherein the display elements are physically separate from each other such as to be separately replaceable and each display element has a display state detection circuit for detecting the display state of said display electrode, a control circuit for latching an external display information signal in response to an external address signal and for controlling said drive circuit by comparing the latched display information signal with an output from said display state detection circuit, and connecting means replaceably electrically connecting the display element to the other electrochromic display elements directly or indirectly.

Said control circuit may be arranged to be addressed by external X and Y signals to latch the external display information signal.

Alternatively, said control circuit may comprise a latch circuit arranged to be addressed by an address signal from a preceding display element and to latch an external display information signal in response to the address signal, and a delay circuit for delaying said address signal for feeding to a succeeding display element.

Preferably the display state detection circuit consists of a comparator for detecting equilibrium potential present at said display electrode.

In one embodiment, said connecting means of each display element are pin terminals, a base member having holes arranged to receive the pin terminals being provided. Thus the electrochromic display device may include means for connecting the base member to external X and Y signals, the control circuit of each display element being arranged to latch an external display information signal in response to the external X and Y signals received thereby.

In another embodiment said connecting means of each display element comprises mutually engageable indent portions for connecting the display elements in series.

In a further embodiment said connecting means of each display element comprises pin terminals extending therefrom and holes for receiving the pin terminals of an adjacent display element for connecting the display element in series.

The control circuit of each display element may be arranged to be addressed by an address signal from a preceding display element to latch an external display information signal in response to the address signal.

Alternatively the control circuit of each display element may be arranged simultaneously to operate the respective drive circuit in response to an external display performing instruction signal.

Preferably the electrochromic display device includes a touch switch consisting of a transparent electrode provided on the surface of each of the display elements, the control circuit being arranged to generate a signal to control the drive circuit in response to a signal produced from said touch switch.

The invention is illustrated, merely by way of example, in the accompanying drawings, in which:—

Figure 1 is a block diagram of an electrochromic display element;

Figure 2 is a perspective view of an electrochromic display device according to the present invention consisting of a matrix of electrochromic display elements of Figure 1;

Figures 3 and 4 are sectional and plan views respectively of one of the electrochromic display elements of the electrochromic display device of Figure 2;

Figure 5 shows an embodiment of a drive circuit of the electrochromic display device of Figure 3;

Figure 6 shows graphically change of the equilibrium potential difference between a display electrode and a counter electrode of an electrochromic display element with the passage of time when tungsten oxide as electrochromic material is provided both on the display electrode and on the counter electrode;

Figures 7 to 12 are embodiments of display elements;

Figures 13(A) and 13(B) illustrate an adapter of an electrochromic display device according to the present invention for receiving a plurality of electrochromic display elements;

Figure 14 illustrates various displays that may be produced by an electrochromic display device according to the present invention;

Figure 15 shows an electrochromic display device according to the present invention consisting of a 5×7 matrix of electrochromic display elements;

Figure 16 illustrates the series connection of electrochromic display elements to form an electrochromic display device according to the present invention;

Figure 17 is a block diagram of one of the electrochromic display elements of the electrochromic display device of Figure 16;

Figure 18 shows one way of connecting electrochromic display elements in an electrochromic display device according to the present invention;

Figures 19 and 20 are front and sectional views of an electrochromic display element;

Figure 21 illustrates the circuitry of the electrochromic display element of Figures 19 and 20;

Figure 22 is a timing chart illustrating the operation of a delay circuit forming part of the circuitry of Figure 21;

Figure 23 is a block diagram of an electrochromic display element having a touch switch using skin resistance detection;

Figure 24 illustrates the display of an electrochromic display element, the display being divided into two and changing in response to the number of operations of a touch switch; and

Figures 25 to 28 are embodiments of electrochromic display elements having touch switches.

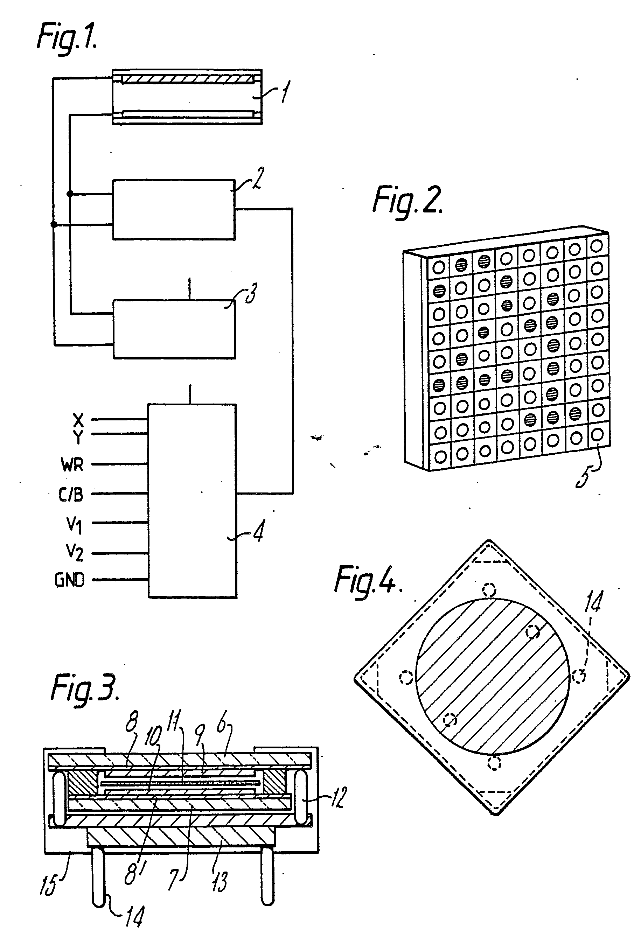

Figure 1 is a block diagram of one embodiment of an electrochromic display element. The electrochromic display element consists of four sections, namely, an electrochromic display panel 1 for producing a display; a display state detection circuit 2 including a comparator for detecting a display state of display electrode of the electrochromic display panel, a drive circuit 3 including an analog switching arrangement for applying a drive voltage to the electrochromic display panel in accordance with a display information input signal C/B, and a control circuit 4 including a coincidence detection circuit for detecting coincidence of the present display state of the display electrode and the display information input signal for designating the display state of the display electrode, a delay circuit and a circuit for processing other signals.

Circuits 2, 3, 4 are made in one body with the electrochromic display panel 1 to form an unitary electrochromic display element.

Figure 2 is a perspective view of an electrochromic display device according to the present invention consisting of a matrix of electrochromic display elements 5 of Figure 1.

Figure 3 is a cross-section of one of the electrochromic display elements 5. A transparent drive electrode 8 is provided on an upper glass substrate 6 and a transparent counter electrode 8' is provided on a lower glass substrate 7. Electrochromic material 9, such as tungsten oxide, is deposited on the transparent electrode 8 and tungsten oxide or other electrode material 10 is deposited on the transparent counter electrode 8'. An electrolyte and a background plate 11 are sandwiched between the upper and lower substrates. A lead 12 makes an electrical connection between the drive electrode 8 and the drive circuit 13. The drive circuit 13 is provided on the lower substrate and signals are fed to and from an external device through pin terminals 14. The panel is made in a body with the drive circuit and mechanical strength is given by a protective case 15. Figure 4 is a front view of the electrochromic display element of Figure 3.

The operation of the electrochromic display element of Figure 3 will be explained in conjunction with several embodiments in which the electrochromic material 9 and the counter electrode material are both tungsten oxide.

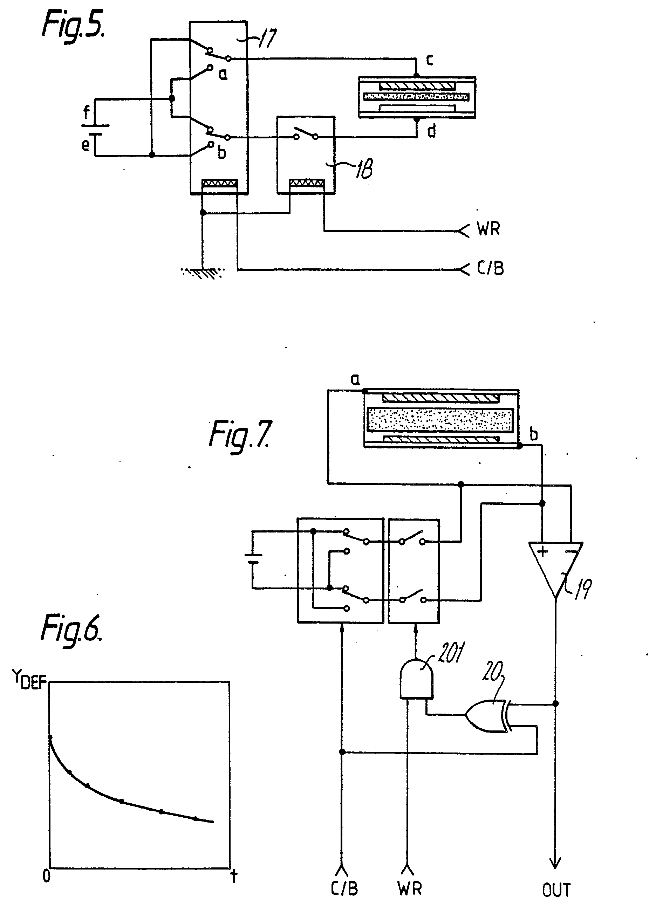

Figure 5 shows the simplest embodiment of the drive circuit 13. This is a drive circuit composed of two relay switches 17, 18 for changing the display state of the electrochromic display element. The relay switch 17 is controlled by the display information input signal C/B for instructing the display state of the display electrode. The signal C/B when at a high level designates the instruction for colouring the display electrode. The signal C/B when at a low level designates the instruction for bleaching the display electrode. The relay switch 18 is controlled by a write signal WR. The write signal instructs driving of the electrochromic display element. When the signal C/B is at a low level in Figure 5 a terminal $a$ of the relay switch 17, which is connected to a point $c$ of the display electrode, is connected to a negative side $e$ of a power supply and a terminal $b$ which is connected to a point $d$ of the counter electrode is connected to a positive side $f$ of the power supply. When the write signal is at a high level, the relay switch 18 is turned ON. As a result, a drive voltage of negative polarity is applied to the display electrode and the display goes to the bleached state. Once the display is bleached, the display electrode holds the bleached state even if the power supply is turned OFF. When the next signal C/B is also at low level, which again designates the instruction for bleaching the display electrode, however, there is. an irrationality that the display electrode which is already bleached is driven to bleach itself again. In the same manner there is an irrationality that an already coloured display electrode is driven for colouring itself repeatedly. To eliminate this irrationality, the present invention provides the display state detection circuit which controls the drive circuit by detecting the display state of the display electrode.

An electro-chemical electromotive force generated between the display electrode in the coloured or bleached state and the counter electrode produces an equilibrium potential when no voltage is applied to the display electrode i.e. when the display electrode is in a memory state. This equilibrium potential will be illustrated with reference to the case where the electrochromic material (e.g. tungsten oxide), is deposited both on the display electrode and the counter electrode.

Figure 6 shows a change of the equilibrium potential between a coloured display electrode and a bleached counter electrode with the passage of time. When the display electrode changes from the coloured state to the bleached state and the counter electrode changes from the bleached state to the coloured state, the polarity of the equilibrium potential is reversed. Therefore, the display state of the electrochromic display electrode is detected by the polarity change of the equilibrium potential using a comparator.

Figure 7 illustrates an embodiment of an electrochromic display element having a comparator 19. The comparator 19 outputs a positive voltage when a positive differential input from the electrochromic display element is fed to the comparator, while it outputs a zero voltage when a negative differential input from the electrochromic display element is fed to the comparator. Thus the output from the comparator 19 reverses in response to the display state of the display electrode and so detects the display state. On the basis of this detection, the irrational display drive such as colouring an already coloured display electrode or bleaching an already bleached display electrode is eliminated.

The equilibrium potential of a coloured tungsten oxide film (referred to as $V_c$) is lower than that of a bleached tungsten oxide film (referred to as $V_B$). When the tungsten oxide film on the display electrode is coloured and the tungsten oxide film on the counter electrode is bleached, a difference voltage $V_{DEF}$ between the inverting input of the comparator 19 which is connected to the display electrode and the non-inverting input of the comparator 19 which is connected to the counter electrode is represented by:

$$V_{DEF}=V_B-V_C>0$$

In this case the output of the comparator 19 is at high level which indicates that the display electrode is in the coloured state.

When the tungsten oxide film on the display electrode is bleached and the tungsten oxide film on the counter electrode is coloured, $V_{DEF}$ is represented by:

$$V_{DEF}=V_B-V_C<0$$

In this case the output of the comparator 19 is at low level which indicates that the display electrode is in the bleached state.

The following two cases have to be taken into account when the signal C/B is at a high level i.e. when the signal C/B designates the instruction for colouring the display electrode.

1. When the output from the comparator 19 is high level, i.e. when the tungsten oxide film on the display electrode is presently in the coloured state, an output from an exclusive OR gate 20 is at low level since the signal C/B is high level. In this case the tungsten oxide film on the display electrode does not colour even if the write signal WR is high level because the write signal is blocked by an AND gate 201.

2. When the electrochromic display element is in the bleached state (which hereinafter refers to the display state of the tungsten oxide film on the display electrode unless otherwise specified), the output from the exclusive OR circuit 20 is at a high level since the signal C/B is high level. In this case, the electrochromic display element changes from a bleached state to the coloured state in response to the write signal.

Similar operations occur when the signal C/B is low level, in other words if the electrochromic display element is in the bleached state it is maintained in the bleached state and if it is in the coloured state it is changed to the bleached state.

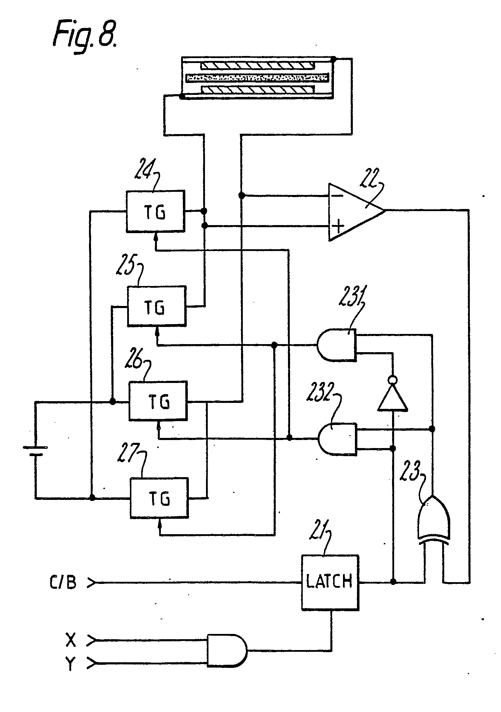

Figure 8 illustrates another embodiment of an electrochromic display element. An electrochromic display device consisting of a matrix of electrochromic display elements of Figure 8 may be constructed, lines and rows of the matrix being addressed by X and Y signals. The signal C/B, which is a series input data signal representing display information, is latched by a latch circuit 21 when the electrochromic display element is addressed by the X and Y signals.

An output from a comparator 22 and a latched output of the latch circuit 21 is fed to an exclusive OR circuit 23. When the output from the exclusive OR circuit 23 is at high level, i.e. when the present display state is different from the display information data of the signal C/B, a pair of AND gates 231, 232 are open. Thus two out of four transmission gates 24 to 27 are selected by the latched signal C/B to the AND gates 231, 232 so as to drive the electrochromic display element. Switching between the coloured state and the bleached state of the panel is thus performed.

The transmission gates 24 to 27 are used as the drive circuit of the electrochromic display element and the number of terminals of the electrochromic display device as a whole is reduced by using X and Y signals for addressing.

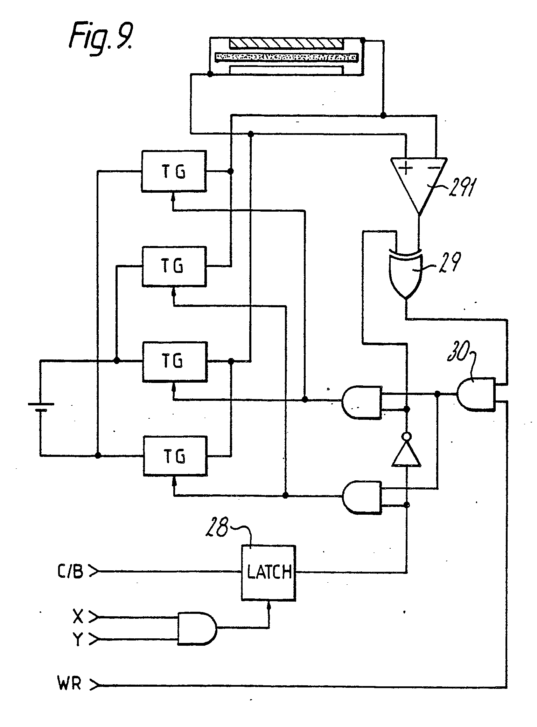

In Figure 9 there is shown a further electrochromic display element. Switching timing between coloured and bleached states is controlled by applying a write signal WR. Timing control by the write signal prevents there being a difference in drive timing of each of the electrochromic display elements in an electrochromic display device consisting of a matrix of electrochromic display elements by the simultaneous switching between coloured states and bleached states of the overall electrochromic display device. Namely, in the electrochromic display device each of the electrochromic display elements addressed in turn by the X and Y signals memorizes the display information data assigned to each electrochromic display element from the signal C/B in a latch circuit 28. The write signals are simultaneously fed to all the electrochromic display elements when all the electrochromic display elements finish latching the display information data to change the display. The output from the comparator 291 and the latched display information data are together fed to an exclusive OR circuit 29, which thus detects whether or not the display should be changed.

The write signal and the output from the exclusive OR circuit 29 are connected to an AND gate 30. Therefore only when the output from the exclusive OR circuit 29 is high level does the write signal pass the AND gate 30 to operate a drive circuit.

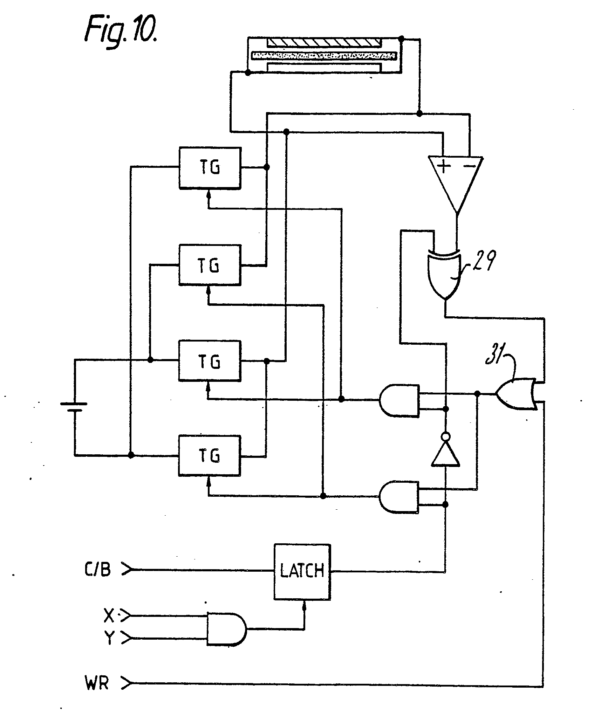

In a modification of Figure 9 shown in Figure 10 the write signal and an output from the exclusive OR circuit 29 is connected to an OR gate 31. Therefore the display change timing, which is ordinarily controlled by the output from the exclusive OR circuit 29 is also controlled by the external write signal.

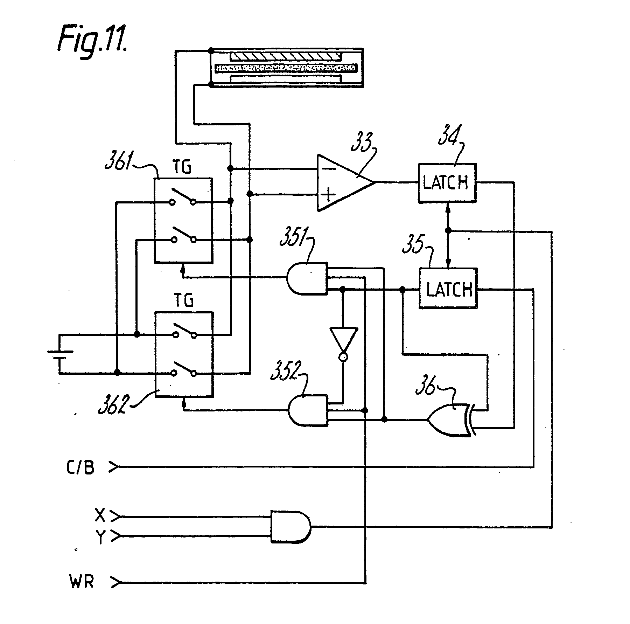

The embodiment of an electrochromic display element according to the present invention shown in Figure 11 shows that the actual display state of the electrochromic display element i.e. the output of a comparator 33 is latched by a latch circuit 34 and simultaneously the signal C/B, which is the series display information data, is latched by a latch circuit 35 when both the X and Y signals are high level i.e. when the electrochromic display element is addressed.

The outputs from the latch circuits 34, 35 are fed to an exclusive OR circuit 36 which detects whether or not the display state should be changed. Two transmission gates 361, 362 which drives the electrochromic display element are controlled by a latched output of the signal C/B. When the output from the exclusive OR circuit 36 and the write signal WR are both at high level, a pair of three input AND gates 351, 352 pass the latched signal C/B to control the pair of transmission gates 361, 362 so as to change the display state while the write signal is high level.

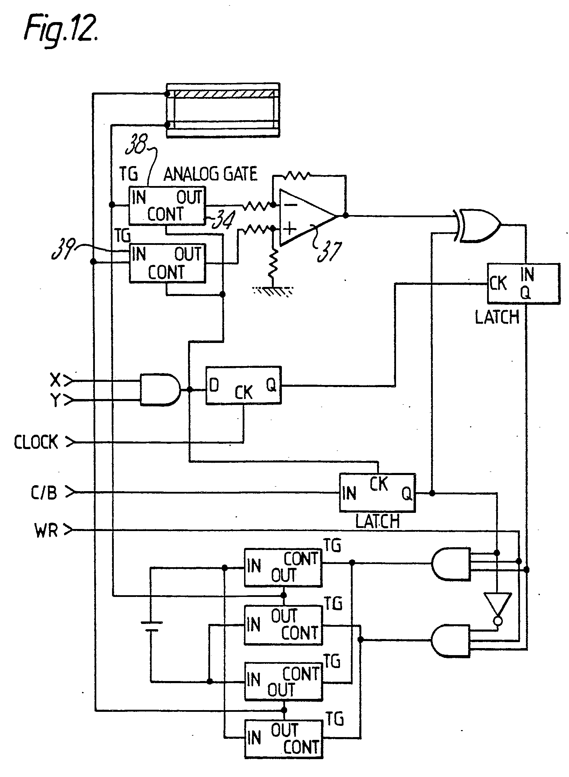

Figure 12 shows an embodiment of an electrochromic display element in which C-MOS transmission gates 38, 39 are inserted into a pre-stage of a comparator 37. When the number of electrochromic display elements is increased in an electrochromic display device consisting of a matrix of electrochromic display elements, the time available to scan each electrochromic display element is considerably shortened. Thus a high-speed comparator is needed. The high speed comparator consists of a bipolar integrated circuit. Since input impedance of a bipolar comparator is about 2 M $\Omega$, a leakage current around 0.5 $\mu$A flows. To prevent this leakage current the transmission gates 38, 39 are provided as a pre-stage of the comparator 37 whereby the input impedance is higher, the leakage current is reduced and the memory characteristic of the electrochromic display element is improved.

As illustrated, each electrochromic display element is provided with a driver circuit with supplementary circuits in one body. Thus a base member or an adapter to mount a plurality of electrochromic display elements to form a dot matrix electrochromic display device needs only an electrode pattern to connect the electrochromic display elements to each other.

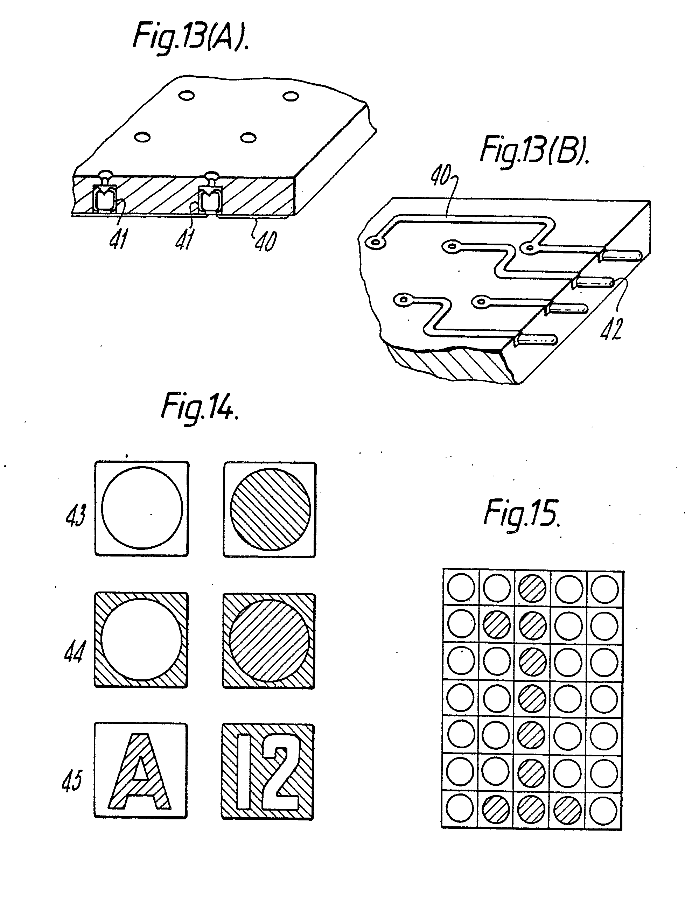

Figure 13(A) is a top view of an adapter with holes to receive pin terminals of the electrochromic display elements which are connected together by an electrode pattern 40 (Figure 13(B)). A spring 41 holds each pin terminal of the electrochromic display elements and makes electrical contact therewith. An adapter has pin terminals 42 to make electrical connections with external control circuitry. The electrochromic display elements are arranged as a matrix on the adapter to form an electrochromic display device which displays information as a whole. Thus an electrochromic display device such as that shown in Figure 2 may be constructed as a matrix of electrochromic display elements producing a two-dimensional dot information display.

Figure 14 shows various displays produced by electrochromic display elements. Reference numeral 43 shows a positive display i.e. the colour of the portion surrounding a circular display portion is the same as that of the circular display portion when the latter is in the bleached state. Reference numeral 44 shows a negative display i.e. the colour of the portion surrounding the circular display portion is the same as that of the display portion when the latter is in the coloured state. In either case the shape of the display portion can be freely selected. Reference numeral 45 shows a display of a numeral or a letter of the alphabet. Needless to say positive and negative displays can be freely chosen by the colour of the portion surrounding the display portion whereby a full variety of displays is achieved.

Electrochromic display elements may be used in the construction of electrochromic display devices according to the present invention of various display capacity by changing the size of the electrochromic display elements.

Figure 15 shows an embodiment of an electrochromic display device consisting of a 5×7 matrix of electrochromic display elements according to the present invention. The 5×7 dot matrix is for general character display i.e. is capable of displaying numerals and other characters. A message display device may be achieved by arranging a plurality of 5×7 matrix electrochromic display devices together.

Should an electrochromic display element in an electrochromic display device be broken, only the broken electrochromic display element needs replacing since each electrochromic display element is physically separate from its neighbours. This makes maintenance of the electrochromic display device relatively easy. Moreover, display size and/or display form can be freely chosen from various combinations of electrochromic display elements.

The number of pin terminals for connecting the adapter shown in Figures 13(A) and 13(B) to external control circuitry will be examined in the case where plurality of electrochromic display elements are arranged on an adapter making up an electrochromic display device according to the present invention. If the electrochromic display elements are individually driven by a static driving method the number of pin terminals becomes very large. The number of pin terminals for connecting the adapter to external control circuitry will be examined, the circuitry of each electrochromic display element being as shown in Figure 1 and the electrochromic display elements being arranged as a matrix to form an electrochromic display device. Signals and powers fed to each electrochromic display element in Figure 1 are X, Y, WR, C/B, $V_1$, $V_2$, GND where,

X is a row signal to address a specified electrochromic display element

Y is a line signal to address a specific electrochromic display element

WR is a write signal to perform display change of each electrochromic display element simultaneously after display information data for designating a display state of the electrochromic display element is registered by each electrochromic display element. Each electrochromic display element registers the display information data when addressed by X and Y signals

C/B is a display information signal in which a set of display information data is continued serially i.e. the display information data represents the display information to be displayed on the respective electrochromic display elements of a matrix thereof as binary data

$V_1$ is a circuit source voltage

$V_2$ is a source voltage for driving the electrochromic display device

GND is earth.

Of these signals, the signals WR, C/B, $V_1$, $V_2$ and GND are common to all the electrochromic display elements. The signals X are common to each row of electrochromic display elements and the signals Y are common to each line of electrochromic display elements. Accordingly, if the electrochromic display device has $m$ rows and $n$ lines and the total number of pin terminals of the adapter is T, T is given by:

$$T = n + m + 5$$

The number of terminals of a matrix electrochromic display device consisting of a matrix of electrochromic display elements is almost equivalent to the number of terminals of a matrix liquid crystal display device driven by time sharing.

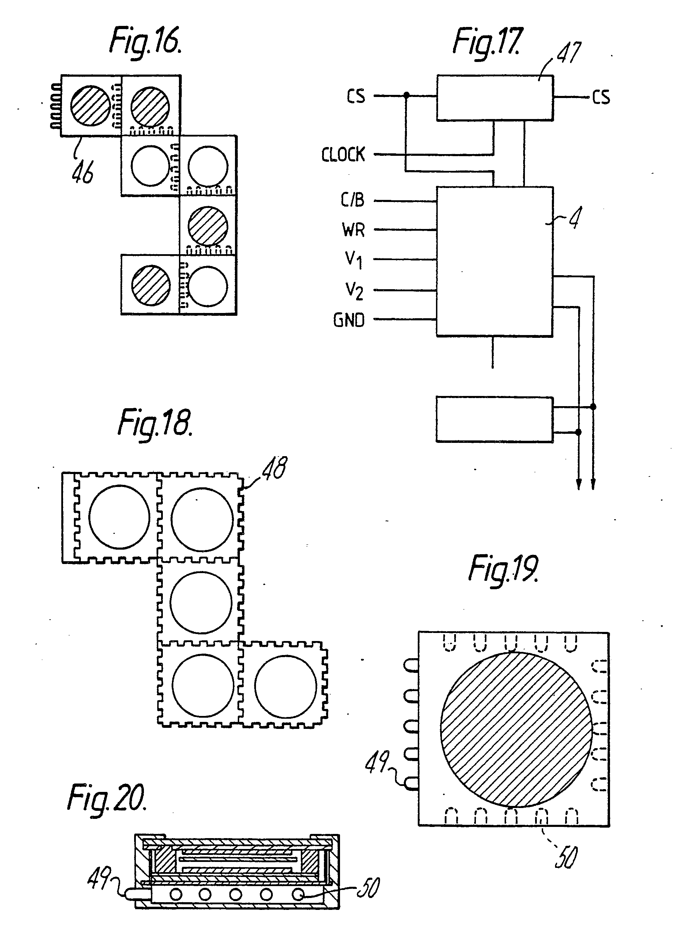

Figure 16 shows an electrochromic display device according to the present invention consisting of a plurality of electrochromic display elements connected in series using pin terminals and

Figure 17 is a circuit block diagram of each of the electrochromic display elements.

The electrochromic display element of Figure 17 differs from that of Figure 1 in that the signal to address each electrochromic display element is not X and Y signals but a single signal CS. The signal CS produced from a preceding electrochromic display element is fed to a bit register 47 of the present electrochromic display element to address it. At the same time the signal CS is delayed by one bit in the bit register 47 and fed to the succeeding electrochromic display element to address it. The signals C/B with display information are memorised in turn in each electrochromic display element addressed by the signal CS.

The addressed electrochromic display element latches the signal C/B i.e. the display series information data and memorises it as the display information data of the electrochromic display device. The signals required by each electrochromic display element are CS, CLOCK, C/B, WR, $V_1$, $V_2$ and GND.

Since the seven signals are common to all electrochromic display elements only seven pin terminals are needed to connect the entire electrochromic display device to external control circuitry. This construction eliminates complicated wiring for connecting each of the electrochromic display elements to each other and provides an electrochromic display device with relatively simple structure maintenance of the electrochromic display device being simplified.

Figure 18 shows the connection of electrochromic display elements to form an electrochromic display device according to the present invention. The four sides of each electrochromic display element are provided with indent portions. Electrode portions 48 are provided at each indent to make an electrical connection with the adjacent electrochromic display element.

The removal of a broken electrochromic display element is somewhat troublesome in the case where the electrochromic display elements are interconnected by pin terminals as shown, for example, in Figure 16. However, a broken electrochromic display element is relatively easily removed in the case of the electrochromic display device shown in Figure 18.

The construction of Figure 18 proves its merits in the case where the electrochromic display device is used outdoors where it can be damaged easily. The simple replacement and maintenance of each electrochromic display element outdoors is an important advantage.

Figures 19 and 20 illustrate an embodiment of an electrochromic display element. Pin terminals 49 are provided on each side of the display element for connection to an adjacent electrochromic display element and holes 50 for receiving the pin terminals of adjacent electrochromic display elements are provided on the other three sides. Since the pin terminals 49 project horizontally from the electrochromic display element shown in Figure 20, the electrochromic display elements are connected longitudinally and laterally by inserting the pins in appropriate holes of the electrochromic display elements above, below or to the right.

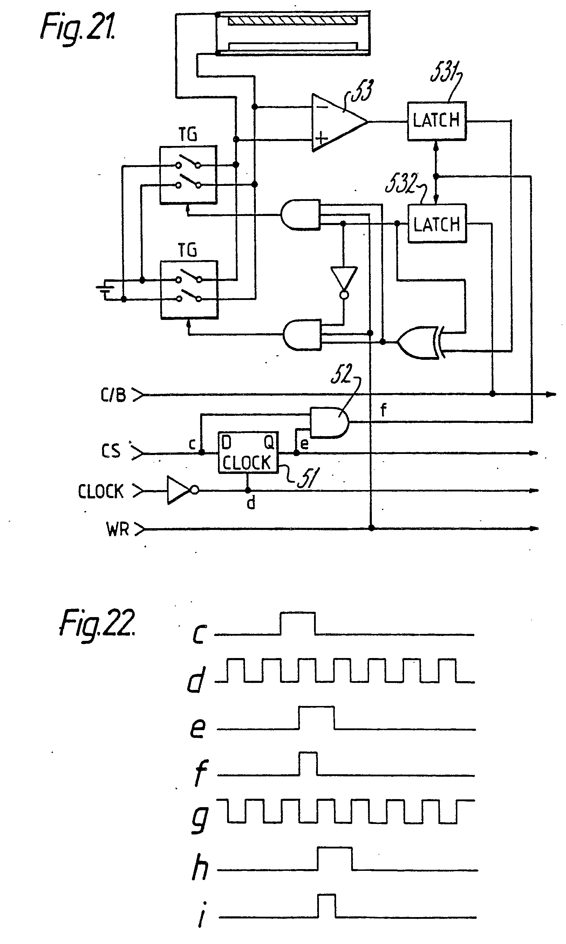

Figure 21 illustrates the circuitry of the electrochromic display element of Figures 19 and 20. The circuitry comprises a D-flip-flop 51 to delay the signal CS which is the address signal of the particular electrochromic display element and outputs a signal CS which addresses the succeeding electrochromic display element.

Figure 22 is a time chart illustrating the operation of the D-flip-flop 51 and an AND gate 52 for producing an address signal for the succeeding electrochromic display element. The waveforms c to i in Figure 22 illustrate the signals appearing at the points bearing the corresponding letters in Figure 21.

The signal CS (signal c) is fed to the D-flip-flop 51 and latched at the positive going timing of an inverted clock signal (signal d). By this operation the signal c is latched by a half period of the signal d. A selection signal f is produced by the AND gate 52 when the signal c and the signal e at an output of the D-flip-flop 51 are fed to the AND gate 52.

The signal e for the succeeding electrochromic display elements is fed and delayed by a signal g, which is the signal d inverted, to obtain a signal h. When the signals e, h are fed to the AND gate 52 of the succeeding electrochromic display element, a selection signal i at the succeeding display device is produced in a similar manner to the selection signal f.

Thus one of the electrochromic display elements is selected by delaying the signal CS and the signal C/B containing display information serial data and an output from a comparator 53 are latched by latch circuits 531, 532 respectively in response to the selection signal f.

Since the electrochromic display elements are selected in turn by shifting the signal CS with the clock signal, only two signal lines are needed for an electrochromic display device having an $n \times m$ matrix of electrochromic display elements.

It is one object of the present invention to provide an electrochromic display device with electrochromic display elements which serves also as information input devices by using the memory characteristics of electrochromic material as well as outputting display information. In this case the display state detection circuit detects the external information once inputted and memorised by the display electrode. For example, the display information is memorised by the electrochromic material even after the power is turned off. When the power is turned on again, the display state detection circuit detects the display information as it was when the power was turned off. Thus the electrochromic display element is driven without interruption and as if the power had never been turned off. Thus electrochromic display elements serve as rewritable non-volatile memories as well as display devices.

An electrochromic display element produces an effective display since it comprises a drive circuit controlled by the display state detection circuit which detects the display state. Further the memory characteristic of electrochromic material is used to effect since the display information held by the display electrode can be detected. Thus, for example, a conversational or interactive information input/output device may be provided using both the display characteristic and the memory characteristic of electrochromic material. The following is an illustration of such an information input/output device.

An external input element such as a touch switch is provided and connected to an electrochromic display element. The advantage and importance of the provision of the touch switch will be understood from the following. Information is transferred essentially in the same manner between person and person, person and machine and machine and machine. In the case of a person, for example, information takes the form of light, sound, etc. detected by sense organs such as eyes, ears, etc. which act as input systems to the human brain. A physical stimulus is converted into physiological reaction by receptors existing in the eyes, ears, etc. and reaches the centre of the brain proper via neural transfer pathways. The brain proper processes information such as memory, learning, recognition, thinking and instructs mouths, hands, feet etc. which act as output systems. This is the information transfer of a person. The information transfer of a computer is similar to that of the brain proper of a person.

Information transfer between persons is made by mutually interlocking the input system of one with the output system of the other and vice versa. If a person is replaced by a machine, the information transfer system is between a person and a machine.

An electrochromic display element with an external input element such as a touch switch etc. is useful as a display device which simultaneously holds the functions of an input system and an output system of the machine and realises a "conversation" or interaction between a person and the machine.

The following are examples of touch switches with different operating principles.

(1) Hum detection
The hum produced between a probe and a return power circuit is detected to drive an internal electronic circuit.

(2) Skin resistance detection
Skin resistance of a person has a value between several 100 $K\Omega$ and several $M\Omega$. An input terminal of an electronic circuit is held at a high level with an impedance R of several 10 $M\Omega$. A skin resistance R' is added by touching an input terminal to divide an input voltage by $R'/R+R'$, and an input of a logic element is inverted to detect that the input terminal has been touched.

(3) Oscillation starting
An oscillating circuit is designed to have an easily oscillating state. An oscillation is excited when a person touches a part of the oscillating circuit and applies the static capacitance of the person.

Although there are other types of touch switches such as oscillation stop systems, pulse voltage attenuation systems, and contact systems using contacts of conducting materials like a conducting rubber, a touch switch using skin resistance detection will be illustrated in the following embodiments.

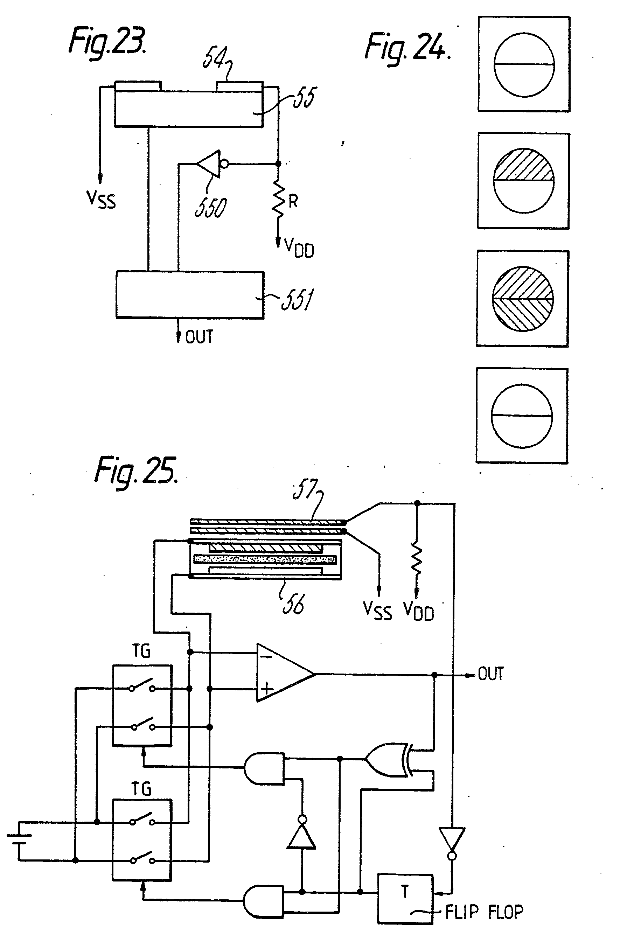

Figure 23 is a block diagram of an electrochromic display element with a touch switch using skin resistance detection. Two transparent conductive film electrodes 54, for example of plastics material, are deposited on an upper surface 55 of the electrochromic display element. One electrode is connected to $V_{SS}$ and the other is connected to $V_{DD}$ through a resistance R. One end of the resistance R is connected to a C-MOS inverter 550 with a high input impedance.

The output of the inverter is processed by a control circuit 551. When a part of a person touches the two electrodes 54 simultaneously, the input voltage of the C-MOS inverter 550 is reduced so the output from the C-MOS inverter inverts and detects the touch input. The output from the C-MOS inverter is processed by the control circuit 551 and the electrochromic display element 55 produces a display. Thus the switch input of the touch switch is memorised by the display electrode of the electrochromic display element. This information is detected by the display state detection circuit (not shown) and transferred to an external information processing device.

A pattern information input device may be constructed by arranging a plurality of electrochromic display elements of Figure 23 each having a touch switch in a matrix. Thus a desired pattern may be inputted and displayed by tracing a fingertip over the touch switches of the matrix.

An electrochromic display element with a touch switch may function separately as a single electrochromic display device. Figure 24 shows the display of such an electrochromic display device. The display is divided into n, in this case any two, and the display state is changed according to the number of times the touch switch is operated whereby more information can be inputted by means of a single touch switch. When the operation of a machine is stopped by any unusual occurrence in the power supply, the touch switch, which is used to operate the machine, memorises the working state of the machine at the time operation was stopped and this state is displayed by the electrochromic display device.

It is thought that this type of input device which includes an electrochromic display element having a memory characteristic will be widely applied in the future as a man-machine interface.

Figures 25 to 28 illustrate various embodiments of electrochromic display devices according to the present invention with touch switches. The electrochromic display element shown in Figure 25 is a closed electrochromic display element. The display state of a display panel 56 is determined by the number of operations of a touch switch 57. The display panel colours by operating the touch switch once and bleaches by operating it twice. A pattern information input device is provided by arranging a matrix of electrochromic display elements of Figure 25 in lines and rows. Namely, pattern information is memorised as a fingertip is traced on the surface of the display panel. Comparing Figure 25 with Figure 10 it will be seen that the signal from the touch switch of Figure 25 replaces the signal C/B.

The switching state is memorised even after the power supply is turned off so that, for example, the internal state of a machine can be visually checked.

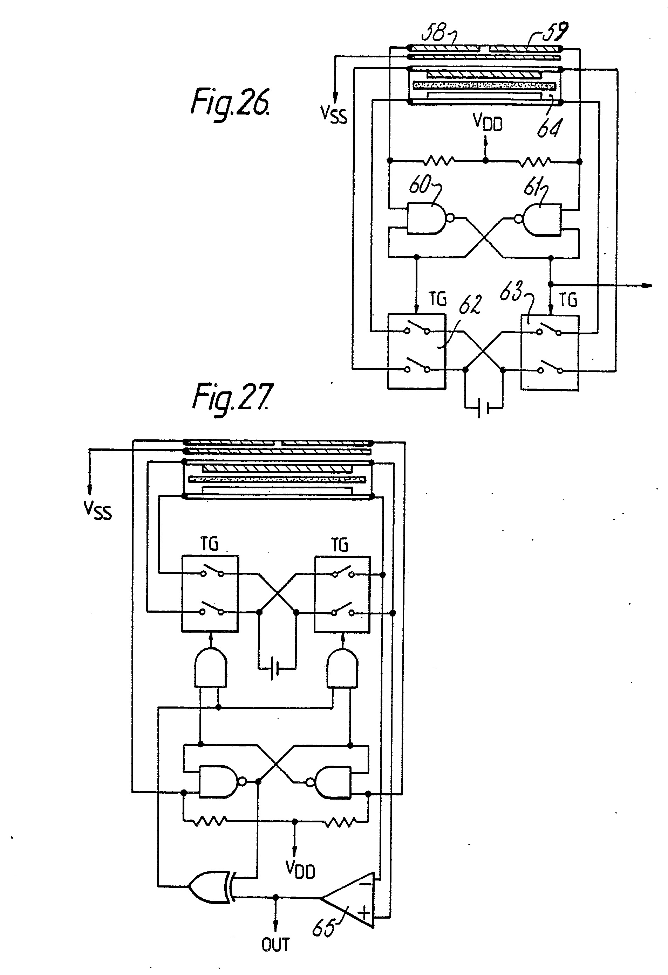

Figure 26 shows an embodiment with two touch switches 58, 59. When the touch switch 58 is operated, a flip-flop consisting of NAND gates 60, 61 turns ON a pair of transmission gates 62, 63 and a voltage for colouring the display electrode is applied to a display panel 64. When the touch switch 59 is operated, on the other hand, the display electrode is bleached.

Figure 27 is an embodiment where the memory characteristic is fed to the exterior by a comparator 65.

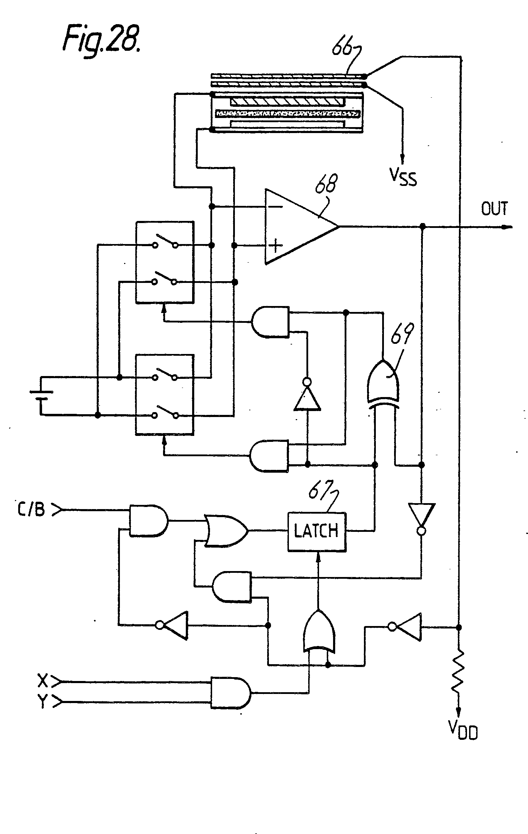

Figure 28 shows an embodiment which is capable of receiving both display information data input by a touch switch 66 and display information data input from a signal C/B. The electrochromic display elements of Figure 28 may be arranged in a matrix. Display information data input and display operation as a result of the signal C/B are the same as described in relation to Figure 10. The display information data signal is fed to a latch circuit 67 by operating the touch switch 66. For example, when a fingertip traces a character on the surface of display panels of a matrix of electrochromic display elements of Figure 28, the touch signal is fed to each latch circuit 67 and displayed. In this case the display produced by the touch switches always comes before the display produced by the signal C/B.

Simultaneously the displayed data is provided to exterior circuitry by a display state detection circuit 68. The electrochromic display element of Figure 28 thus performs both the function of a display read-out of the signal C/B and character input by operation of the touch switch.

When the touch switch 66 is operated, the inverted output from a comparator 68 is latched by the latch circuit 67 at the time the touch switch is operated. The latched signal of the latch circuit 67 and the output of the display state detection circuit 68 are fed to an exclusive OR gate 69 whereby the display state is reversed because these two signals have opposite polarity.

The electrochromic display elements according to the present invention and described above have the following advantageous features:

(1) An electrochromic display device of arbitary shape and capacity can be constructed from the electrochromic display elements and can be driven by time sharing.

(2) An $n \times m$ matrix electrochromic display device requires about $n+m$ pin terminals for connection to external control circuitry. Electrochromic display elements connected in series require 10 or less pin terminals.

(3) The provision of a display state detection circuit in an electrochromic display element reduces power consumption of the electrochromic display element by using the memory characteristic of the electrochromic material. Thus the electrochromic display element can be used as a random-access non-volatile memory.

(4) The display element may function as a bi-directional display device by the addition of a touch switch. A matrix of electrochromic display elements with memory display state detection circuits memorises and can be used to display the internal status of a machine even after the power supply is turned off so that mis-operation is eliminated.

**Claims**

1. An electrochromic display device comprising a plurality of electrochromic display elements each of which makes up a picture unit of a matrix display each display element consisting of an electrochromic display portion (1) having a display electrode (9) which serves as a picture element, and a drive circuit (3) for changing the display state of said display electrode, characterised by the display elements being physically separate from each other such as to be separately replaceable and each display element having a display state detection circuit (2) for detecting the display state of said display electrode, a control circuit (4) for latching an external display information signal (C/B) in response to an external address signal (X, Y) and for controlling said drive circuit by comparing the latched display information signal with an output from said display state detection circuit, and connecting means (14) replaceably electrically connecting the display element to the other electrochromic display elements directly or indirectly.

2. A display device as claimed in claim 1, characterised in that said control circuit (4) is arranged to be addressed by external X and Y signals to latch the external display information signal (C/B).

3. A display device as claimed in claim 1, characterised in that said control circuit (4) comprises a latch circuit arranged to be addressed by an address signal from a preceding display element and to latch an external display information signal in response to the address signal, and a delay circuit (47) for delaying said address signal for feeding to a succeeding display element.

4. A display device as claimed in any preceding claim, characterised in that the display state detection circuit consists of a comparator (19) for detecting equilibrium potential present at said display electrode.

5. An electrochromic display device as claimed in any preceding claim, characterised in that said connecting means of each display element are pin terminals, a base member having holes arranged to receive the pin terminals being provided.

6. An electrochromic display device as claimed in claim 5, characterised by means for connecting the base member to external X and Y signals, the control circuit of each display element being arranged to latch an external display information signal in response to the external X and Y signals received thereby.

7. An electrochromic display device as claimed in any of claims 1 to 4, characterised in that said connecting means of each display element comprises mutually engageable indent portions for connecting the display elements in series.

8. An electrochromic display device as claimed in any of claims 1 to 4, characterised in that said connecting means of each display element comprises pin terminals extending therefrom and holes for receiving the pin terminals of an adjacent display element for connecting the display element in series.

9. An electrochromic display device as claimed in claim 7 or 8, characterised in that the control circuit of each display element is arranged to be addressed by an address signal from a preceding display element to latch an external display information signal in response to the address signal.

10. An electrochromic display device as claimed in any of claims 1 to 5, characterised in that the control circuit of each display element is arranged simultaneously to operate the respective drive circuit in response to an external display performing instruction signal.

11. An electrochromic display device as claimed in any preceding claim, characterised by including a touch switch consisting of a transparent electrode provided on the surface of each of the display elements, the control circuit being arranged to generate a signal to control the drive circuit in response to a signal produced from said touch switch.

**Patentansprüche**

1. Elektrochromische Darstellungsvorrichtung mit einer Vielzahl von elektrochromischen Darstellungselementen, die jeweils eine Bildeinheit einer Matrixdarstellung bilden und jeweils aus einem elektrochromen Darstellungsteil (1) mit einer als. Bildelement dienenden Darstellungselektrode (9) und einer Treiberschaltung (3) zur Änderung des Darstellungszustandes der Darstellungselektrode bestehen, dadurch gekennzeichnet, daß die Darstellungselemente körperlich voneinander getrennt sind, so daß sie getrennt ersetzbar sind und jedes Darstellungselement eine Darstellungszustands-Detektorschaltung (2) zur Erfassung des Darstellungszustandes der Darstellungselektrode aufweist, daß eine Steuerschaltung (4) zur Pufferung eines externen Darstellungsinformationssignals (C/B) als Funktion eines externen Adreßsignals (X, Y) sowie zur Steuerung der Treiberschaltung durch Vergleich des gepufferten Darstellungsinformationssignals mit einem Ausgangssignal der Darstellungszustands-Detektorschaltung vorgesehen ist, und daß eine Verbindungseinrichtung (14) zur direkten oder indirekten ersetzbaren elektrischen Verbindung des Darstellungselementes mit den anderen elektrochromischen Darstellungselementen vorgesehen ist.

2. Darstellungsvorrichtung nach Anspruch 1, dadurch gekennzeichnet, daß die Steuerschaltung (4) durch externe X und Y-Signale adressierbar ist, um das externe Darstellungsinformationssignal (C/B) zu puffern.

3. Darstellungsvorrichtung nach Anspruch 1, dadurch gekennzeichnet, daß die Steuerschaltung (4) einen durch ein Adreßsignal von einem vorhergehenden Darstellungselement adressierbaren Pufferkreis zur Pufferung eines externen Darstellungsinformationssignals als Funktion des Adreßsignals sowie eine Verzögerungsschaltung (47) zur Verzögerung des Adreßsignals für die Speisung eines nachfolgenden Anzeigelementes aufweist.

4. Darstellungsvorrichtung nach den vorhergehenden Ansprüchen, dadurch gekennzeichnet, daß die Darstellungszustands-Detektorschaltung aus einem Komparator (19) zur Erfassung eines an der Darstellungselektrode vorhandenen Gleichgewichtspotentials besteht.

5. Elektrochromische Dartellungsvorrichtung nach den vorhergehenden Ansprüchen, dadurch gekennzeichnet, daß die Verbindungseinrichtung jedes Darstellungselementes Stiftanschlüsse und ein Basiselement Löcher zur Aufnahme der Stiftanschlüsse aufweist.

6. Elektrochromische Darstellungsvorrichtung nach Anspruch 5, gekennzeichnet durch eine Einrichtung zur Verbindung des Basiselementes mit externen X- und Y-Signalen und eine Ausbildung der Steuerschaltung jedes Darstellungselementes zur Pufferung eines externen Darstellungsinformationssignals als Funktion der aufgenommenen externen X- und Y-Signale.

7. Elektrochromische Anzeigevorrichtung nach den Ansprüchen 1 bis 4, dadurch gekennzeichnet, daß die Verbindungseinrichtung jedes Darstellungselementes wechselseitig in Eingriff bringbare Kerbteile zur Verbindung der Darstellungselemente in Serie aufweist.

8. Elektrochromische Anzeigevorrichtung nach den Ansprüchen 1 bis 4, dadurch gekennzeichnet, daß die Verbindungseinrichtung jedes Darstellungselementes von ihr ausgehende Stiftanschlüsse sowie Löcher zur Aufnahme der Stiftanschlüsse eines benachbarten Darstellungselementes zur Verbindung der Darstellungselemente in Serie aufweist.

9. Elektrochromische Anzeigevorrichtung nach Anspruch 7 oder 8, dadurch gekennzeichnet, daß die Steuerschaltung jedes Darstellungselementes durch ein Adreßsignal von einem vorhergehenden Darstellungselement adressierbar ist, um ein externes Darstellungsinformationssignal als Funktion des Adreßsignals zu puffern.

10. Elektrochromische Anzeigevorrichtung nach den Ansprüchen 1 bis 5, dadurch gekennzeichnet, daß die Steuerschaltung jedes Darstellungselementes zur Ansteuerung der entsprechenden Treiberschaltung als Funktion eines externen Darstellungsausführungs-Befehlsignals ausgebildet ist.

11. Elektrochromische Anzeigevorrichtung nach den vorhergehenden Ansprüchen, gekennzeichnet durch einen Berührungsschalter, der durch eine auf der Oberfläche jedes der Darstellungselemente vorgesehenen transparenten Elektrode besteht und durch eine Ausbildung der Steuerschaltung zur Erzeugung eines Signals für die Steuerung der Treiberschaltung als Funktion eines durch den Berührungsschalter erzeugten Signals.

**Revendications**

1. Dispositif d'affichage à électrochromes comprenant une pluralité d'éléments d'affichage à électrochromes dont chacun constitue une unité d'image d'un affichage matriciel, chaque élément d'affichage comprenant une partie d'affichage à electrochromes (1) ayant une électrode d'affichage (9) qui sert d'élément d'image, et un circuit d'excitation (3) pour modifier l'état d'affichage de l'électrode d'affichage, caractérisé par des éléments d'affichage physiquement séparés les uns des autres de façon à être remplaçables séparément et chaque élément d'affichage comprenant un circuit de détection d'état d'affichage (2) pour détecter l'état d'affichage de l'électrode d'affichage, un circuit de commande (4) pour mémoriser un signal d'information d'affichage externe (C/B) en réponse à un signal d'adresse externe (X, Y) et pour commander le circuit d'excitation en comparant le signal d'information d'affichage mémorisé à une sortie en provenance du circuit de détection d'état d'affichage, et un moyen de connexion (14) reliant de façon électriquement remplaçable l'élément d'affichage à d'autres éléments d'affichage à électrochromes directement ou indirectement.

2. Dispositif d'affichage selon la revendication 1, caractérisé en ce que le circuit de commande (4) est disposé pour être adressé par des signaux externes (X, Y) pour mémoriser le signal d'information d'affichage externe (C/B).

3. Dispositif d'affichage selon la revendication 1, caractérisé en ce que le circuit de commande (4) comprend un circuit de mémoire disposé pour être adressé par un signal d'adresse en provenance d'un élément d'affichage précédent et pour mémoriser un signal d'information d'affichage externe en réponse au signal d'adresse, et un circuit de retard (47) pour retarder le signal d'adresse pour le fournir à un élément d'affichage suivant.

4. Dispositif d'affichage selon l'une quelconque des revendications précédentes, caractérisé en ce que le circuit de détection d'état d'affichage comprend un comparateur (19) pour détecter le potentiel d'équilibre sur l'électrode d'affichage.

5. Dispositif d'affichage à électrochromes selon l'une quelconque des revendications précédentes, caractérisé en ce que le moyen de connexion de chaque élément d'affichage est constitué de broches, un élément support comprenant des trous étant disposé pour recevoir les broches.

6. Dispositif d'affichage à électrochromes selon la revendication 5, caractérisé par des moyens pour connecter l'élément support à des signaux externes (X, Y), le circuit de commande de chaque élément d'affichage étant disposé pour mémoriser un signal d'information d'affichage externe en réponse à des signaux externes (X, Y) reçus par celui-ci.

7. Dispositif d'affichage à eléctrochromes selon l'une quelconque des revendications 1 à 4, caractérisé en ce que le moyen de connexion de chaque élément d'affichage comprend des parties en saillie mutuellement emboîtables pour relier les éléments d'affichage en série.

8. Dispositif d'affichage à électrochromes selon l'une quelconque des revendications 1 à 4, caractérisé en ce que le moyen de connexion de chaque élément d'affichage comprend des broches faisant saillie à partir de celui-ci et des trous pour recevoir les broches d'un élément d'affichage adjacent pour connecter les éléments d'affichage en série.

9. Dispositif d'affichage à électrochromes selon la revendication 7 ou 8, caractérisé en ce que le circuit de commande de chaque élément d'affichage est disposé pour être adressé par un signal d'adresse en provenance d'un élément d'affichage précédent pour mémoriser un signal d'information d'affichage externe en réponse au signal d'adresse.

10. Dispositif d'affichage à électrochromes selon l'une quelconque des revendications 1 à 5, caractérisé en ce que le circuit de commande de chaque élément d'affichage est disposé simultanément pour actionner le circuit d'excitation respectif en réponse à un signal d'instruction réalisant un affichage externe.

11. Dispositif d'affichage à électrochromes selon l'une quelconque des revendications précédentes, caractérisé en ce qu'il comprend un commutateur à touche comprenant une électrode transparente prévue sur la surface de chacun des éléments d'affichage, le circuit de commande étant disposé pour produire un signal pour commander le circuit d'excitation en réponse à un signal produit par le commutateur à touche.

Fig.1.

Fig.2.

1

2

3

X
Y

WR

C/B

V₁

V₂

GND

4

5

Fig.4.

14

Fig.3.

8  10  11  9  6

12

15  8'  7  13

14

1

Fig.5.

17

c

a

f

d

e

b

18

WR

C/B

Fig.7.

a

b

19

Fig.6.

Y_DEF

201

20

0                    t

C/B        WR        OUT

**Fig. 8.**

Fig. 9.

Fig. 10.

*Fig.11.*

# Fig.12.

Fig.13(A).

Fig.13(B).

40

41 41 40

42

Fig.14.

43

44

45

A I2

Fig.15.

## Fig.16.

## Fig.17.

47

CS

CS

CLOCK

C/B

WR

V₁

V₂

GND

4

46

## Fig.18.

48

## Fig.19.

49

## Fig.20.

49

50

50

*Fig.21.*

LATCH *531*

*53*

TG

*532*

LATCH

TG

C/B

*52*

f

CS

c | D    Q | e

CLOCK

*51*

CLOCK

d

WR

*Fig.22.*

c

d

e

f

g

h

i

Fig.23.

Fig.24.

Fig.25.

Fig.26.

Fig.27.

# Fig.28.